# EUROPEAN PATENT SPECIFICATION

(11) **EP 1 541 841 B1**
(45) Date of publication and mention of the grant of the patent: **24.01.2007**
(21) Application number: 04106455.1
(22) Date of filing: 10.12.2004
(51) Int. Cl.: F02D 41/22, F02M 25/07

(54) **Method for diagnosis of the faults in units of an internal combustion engine air supply system**
Diagnostisches Verfahren zur Feststellung von Fehlern in einem Luftzufuhrsystem für Verbrennungskraftmaschine
Procédé de diagnostic de défauts dans un système d'alimentation en air d'un moteur à combustion interne

(30) Priority: 12.12.2003 IT TO20031000
(43) Date of publication of application: 15.06.2005
(73) Proprietor: C.R.F. SOCIETA' CONSORTILE PER AZIONI, 10043 Orbassano (Torino) (IT)
(72) Inventor: GIOANNINI, Alberto, Strada Torino, 50 10043 ORBASSANO (IT); SERPENTINO, Mirko, Strada Torino, 50 10043 ORBASSANO (IT); SOTTANO, Sara, 10064, PINEROLO (IT)
(74) Representative: Jorio, Paolo

(56) References cited:
- EP-A- 0 778 406
- WO-A-02/12703
- WO-A-03/056161
- PATENT ABSTRACTS OF JAPAN vol. 2003, no. 09, 3 September 2003 (2003-09-03) & JP 2003 129906 A (TOYOTA MOTOR CORP), 8 May 2003 (2003-05-08)
- PATENT ABSTRACTS OF JAPAN vol. 2003, no. 02, 5 February 2003 (2003-02-05) & JP 2002 310006 A (SUZUKI MOTOR CORP), 23 October 2002 (2002-10-23)

## Description

The present invention relates to a method for diagnosis of the faults in units of an internal combustion engine air supply system.

As is known, modern internal combustion engines, with spontaneous or controlled ignition, are equipped with a recirculation system which makes it possible to reintroduce into the cylinders, in a controlled manner, a fraction of the exhaust gases expelled after the combustion. The recirculation system generally comprises a recirculation pipe, which is connected between an exhaust manifold and a pipe for supply of the air to the engine, a cooling device and a recirculation valve or EGR (Exhaust Gas Recirculation) valve, which is controlled by an electronic system for regulation of the rate of recirculation of the exhaust gases.

In the recirculation system, the EGR valve in particular is subject to faults which must be diagnosed efficiently. However, a fault in the EGR valve is difficult to recognise, since it produces effects on the functioning of the engine which are altogether similar to the effects produced by malfunctioning of other units of the air supply system, such as, for example, of the flow meter, which is normally located immediately downstream from the intake filter. (The function of the flow meter is to measure the flow rate of air admitted, and to provide the system with a signal which indicates this flow rate). For example, it frequently occurs that the EGR valve remains locked in a partially open position, even when the system commands closure of it. Because of the consequent blow-by of exhaust gas, the flow rate of fresh air admitted is less than the amount planned, and the flow of fuel into the combustion chambers is also reduced; this leads to a decrease in the performance of the engine, which can also be perceived by the driver. Similarly, a measurement of the flow meter which is faulty in comparison with the real flow (typically because the flow meter is dirtied with oil) causes the system to reduce the quantity of fuel supplied to the cylinders, in the presence of substantial requirements for torque and power. In this case also therefore, the driver perceives a decrease in the performance of the engine.

In practice, the difficulty in discriminating between the two types of malfunctioning leads to the replacement of both the components (flow meter and EGR valve), when in reality only one of the two is faulty. It will be appreciated that the replacement of a component which is still functioning constitutes an unnecessary increase in the times and costs for repair of the vehicle.

According to JP 20031229906, an abnormality diagnostic device for an exhaust gas recirculating device comprises a control unit that diagnoses abnormality of an air flow meter measuring the intake air volume before diagnosing the abnormality of an EGR device.

The object of the invention is to provide a method for diagnosis of the faults, which makes it possible to eliminate the disadvantages described.

According to the present invention, a method is provided for diagnosis of the faults in units of an internal combustion engine air supply system, as defined in Claim 1.

In order to assist understanding of the invention, some embodiments of it are now described, purely by way of nonlimiting example, and with reference to the attached drawings, in which:
- Figure 1 is a simplified block diagram of an internal combustion engine which implements the method according to the present invention;
- Figure 2 is a flow diagram relating to the method according to the present invention; and
- Figures 3-10 are graphs which show the development of values relating to the method according to the present invention.

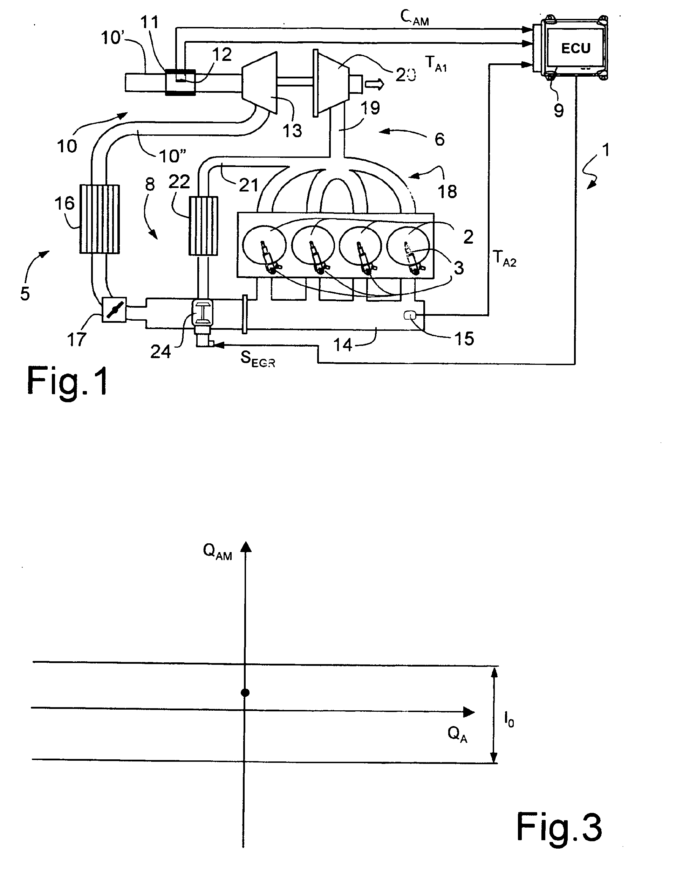

Figure 1 illustrates schematically an internal combustion engine 1, in particular of the spontaneous ignition and supercharged type, comprising a plurality of cylinders 2, with which there are associated respective injectors 3, an air supply/compression system 5, an expansion/exhaust system 6, an exhaust gas recirculation system 8, and a control system 9. The air supply/compression system 5 comprises an intake pipe 10, along which there is located a flow meter 11, which is provided with a first temperature sensor 12; a compressor 13, which is disposed between a low-pressure section 10' and a high-pressure section 10" of the intake pipe 10; an intake manifold 14, which is connected to the cylinders 2; and a second temperature sensor 15, which is accommodated in the intake manifold 14. In addition, a cooling device 16 and a butterfly valve 17 are located along the intake pipe 10.

Via the intake pipe 10, the compressor 13 receives a flow rate of air Q_{A} at ambient pressure, from the intake pipe 10, processes it in order to bring the pressure up to a controlled supercharged value, and supplies it to the cylinders 2, via the supply pipe 14 and the butterfly valve 17. The flow meter 11, which measures the flow rate of the air admitted, the first temperature sensor 12, and the second temperature sensor 15, are connected to the system 9; in particular, the flow meter provides the system 9 with a flow rate signal Q_{AM}, which is correlated to the air flow rate measured, the first temperature sensor 12 provides a first temperature signal T_{A1} which is correlated to the temperature of the air at the input of the intake pipe 10, and the second temperature sensor 15 provides a second temperature signal T_{A2}, which indicates the temperature of the air inside the intake manifold 14.

The expansion/exhaust system 6 comprises an exhaust manifold 18, an exhaust pipe 19 and a turbine 20, which are located along the exhaust pipe 19, and are connected in a known manner to the compressor 13.

The exhaust gas recirculation system 8 comprises a recirculation pipe 21, which is connected between the exhaust manifold 18 and the supply pipe 10, downstream from the butterfly valve 17; a cooling device 22, which is inserted along the recirculation pipe 21; and a recirculation valve or EGR valve 24, which is disposed at the intersection of the recirculation pipe 21 and the supply pipe 10. The EGR valve 24 is controlled by the system 9, by means of a recirculation control signal S_{EGR}, in order to reintroduce into the supply pipe 10 a controlled fraction of the exhaust gases discharged from the cylinders 2.

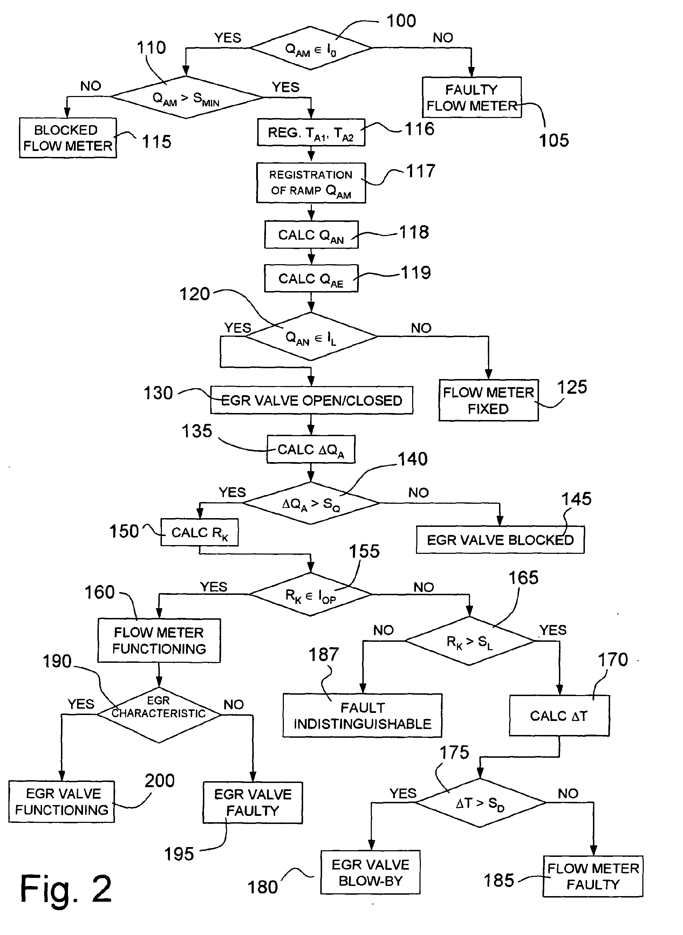

With reference to Figure 2, the method according to the invention comprises the following steps.

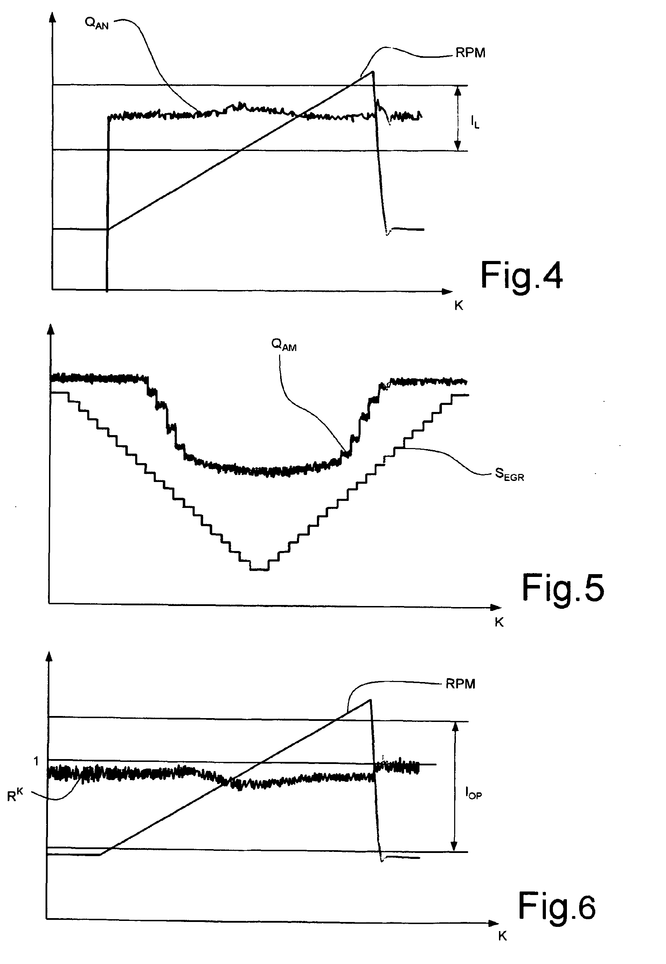

Initially (block 100), a start-up test is carried out on the flow meter 11 with the engine 1 switched off (in the standby or key-on configuration); in particular, it is verified that the flow meter 11 is indicating an air flow rate Q_{A} of zero. It will be appreciated that the condition must be verified irrespective of the configuration (open or closed) of the EGR valve 24. For this purpose (Figure 3), the measured flow rate signal Q_{AM} is compared with an interval of rest I₀ with continuous values, including a flow rate value which is zero and is preferably symmetrical relative to this value. If the measured flow rate signal Q_{AM} is outside the interval I₀ (NO output from block 100), an error code is generated, which indicates a fault of the flow meter 11 (block 105) and the diagnosis procedure is terminated. If, on the other hand, the measured flow rate signal Q_{AM} is within the interval I₀ (YES output from block 100), a test for blockage of the flow meter 11 is carried out (block 110).

The test for blockage of the flow meter 11 is carried out with the engine 1 switched on at minimum speed, and with the EGR valve 24 commanded to be closed, and comprises comparison of the measured flow rate signal Q_{AM} with a minimum response threshold S_{MIN}. If the minimum response threshold S_{MIN} is not exceeded (NO output from block 110), the system 9 generates an error code which indicates a fault of the flow meter 11, or the absence of fluid connection between the flow meter 11 and the compressor 13 (block 115). If the measured flow rate signal Q_{AM} is higher than the minimum response threshold S_{MIN} (YES output from block 110), a test is carried out for linearity of the flow meter 11 (blocks 116-120). The minimum response threshold S_{MIN} used for the test for blockage of the flow meter 11 is calibrated such that it can be exceeded also in the event of a fault of the EGR valve 24, which remains completely open even when closure of it is commanded.

The linearity test is carried out by checking that a specific flow rate signal Q_{AN} measured by the flow meter 11 (i.e. the measured flow rate signal Q_{AM} which is standardised in relation to the number of revolutions of the engine 1), remains substantially constant in the presence of a ramp for the number of revolutions of the engine 1. For example, the number of revolutions is increased gradually from 850 rpm to 3000 rpm within a predetermined time, and the EGR valve 24 is kept completely closed. In addition, before the ramp begins, there is recording of the values of the first and second temperature signals T_{A1},T_{A2}, to be used in successive steps of the method (block 116); during the ramp, there is recording of the values of the measured flow rate signal Q_{AM} supplied by the flow meter (block 117), the specific flow rate signal Q_{AN} is calculated (block 118) and, in addition, the system 9 calculates corresponding values of estimated flow rate Q_{AE} (block 119). In detail, if the specific flow rate signal Q_{AN} remains within an interval of linearity I_{L} throughout the duration of the ramp (YES output from block 120; see also Figure 4), the measured flow rate signal Q_{AM} is proportional to the speed of the engine 1, and a check is carried out on the manoeuvrability of the EGR valve 24 (blocks 130-140); if the specific flow rate signal Q_{AN} goes outside the interval of linearity I_{L} (NO output from block 120), the system generates an error code relative to malfunctioning of the flow meter 11 (flow meter fixed, block 125).

In practice, the start-up test, the blockage test and the linearity test make it possible to verify a first level of efficiency of the flow meter 11 in conditions which are independent from the operative state of the EGR valve 24. In particular, if none of the tests fails, the measured flow rate signal Q_{AM} supplied by the flow meter 11 is not fixed and is proportional to the speed of the engine 1.

The subsequent verification of manoeuvrability of the EGR valve 24 is carried out in conditions which are compatible with the first level of efficiency of the flow meter 11. In particular, the verification of manoeuvrability consists of commanding (block 130) a complete cycle of opening and closure of the EGR valve 24, in successive steps, each of which corresponds, for example, to 5% of the maximum dynamic of the recirculation control signal S_{EGR} (illustrated with a broken line in Figure 5); the speed of the engine 1 is kept constantly to the minimum, and, in addition, at each step there is recording of the corresponding values of the measured flow rate signal Q_{AM} and of the specific flow rate signal Q_{AN}. In addition (block 135), the system 9 calculates the difference ΔQ_{A} between the values of the measured flow rate signal Q_{AM} which correspond to the EGR valve 24 commanded to be completely closed and completely open (more specifically, between a first and second value of the measured flow rate signal Q_{AM} supplied by the flow meter 11 in the presence of the values of the recirculation control signal S_{EGR1}, S_{EGR2}, corresponding respectively to a position of complete closure and to a position of complete opening of the EGR valve 24).

In a subsequent manoeuvrability test (block 140), the difference ΔQ_{A} is compared with a flow rate threshold S_{Q} which can be calibrated. Exceeding of the flow rate threshold S_{Q} (YES output from block 140) indicates that there has been travel of the EGR valve 24, which is therefore not blocked. If, however, the difference ΔQ_{A} is lower than the flow rate threshold S_{Q}, the value is not exceeded (NO output from block 140), the system 9 generates an error code to indicate that the EGR valve is blocked (block 145) .

The difference ΔQ_{A} supplied is significant for execution of the manoeuvrability test, since there has previously been verification of the first level of efficiency of the flow meter 11 (linearity of the response).

If the EGR valve 24 is found not to be blocked, there is execution of verification of precision of the flow meter 11 (blocks 150-160). In detail, firstly there is calculation of the ratio R_{K} between each estimated flow rate value Q_{AE} calculated by the system 9 during the ramp of the linearity test of the flow meter 11 and the corresponding value of the measured flow rate signal Q_{AM} recorded (block 150); see also Figure 6). A first test of accuracy of the flow meter 11 is then carried out (Figure 2, block 155). In particular, if the values of the ratio R_{K} are maintained within an interval of correct functioning I_{OP} which is centred around the unit (YES output from block 155), the system 9 recognises that the response of the flow meter 11 is in conformity with the specifications, and generates a correct functioning code in relation to the flow meter 11 itself (block 160).

A substantial occurrence of values of the ratio R_{K} which are outside the interval of correct functioning I_{OP} (NO output from block 155) indicates a fault which can be attributed either to the flow meter 11, or to blow-by of the EGR valve 24 which is commanded to be closed.

If this latter situation occurs, a test is carried out for location of the fault. In particular, the values of the ratio R_{K} are compared with a limit threshold S_{L} which is greater than all the values of the interval of correct functioning I_{OP} (block 165). If some values of the ratio R_{K} are higher than the limit threshold S_{L}, i.e. if they are considerably distant from the interval of correct functioning I_{OP} (YES output from block 165), a test is carried out for blow-by of the EGR valve 24 (blocks 170-175) .

In particular, the difference ΔT (block 170) between the values of the first and second temperature signal T_{A1}, T_{A2}, recorded before the ramp of the linearity test of the flow meter 11, is compared with a discrimination threshold S_{D} (block 175). If the difference ΔT exceeds the discrimination threshold S_{D} (YES output from block 175), the system 9 generates an error code which indicates imperfect closure of the EGR valve 24 (block 180); otherwise (YES output from block 175), the system 9 generates an error code relative to a fault of the flow meter 11 (185).

If some values of the ratio R_{K} are outside the interval of correct functioning I_{OP}, but the limit threshold S_{L} is not exceeded (NO output from block 165; see also Figure 6), the system 9 generates an error code and indicates that it is impossible to discriminate which is the faulty component, from amongst the flow meter 11 and the EGR valve 24 (block 187) .

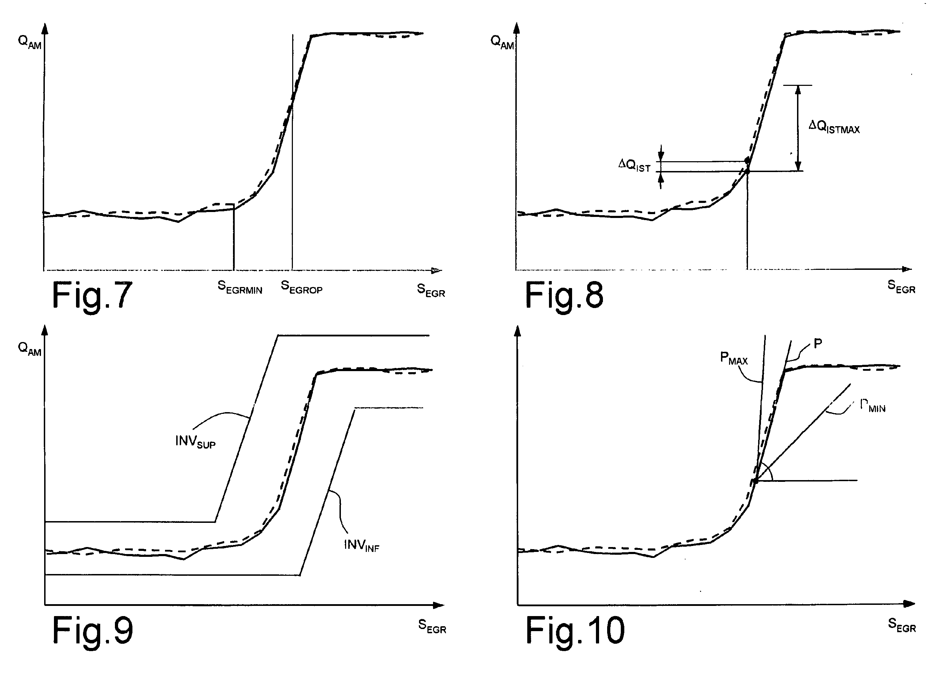

If the test for precision of the flow meter 11 is passed (YES output from block 155, Figure 2), a series of tests is carried out in order to evaluate whether the characteristic of the EGR valve 24 is in conformity with the specifications. The characteristic of the EGR valve 24 is defined by the value of the measured flow rate signal Q_{AM}, according to the value of the recirculation control signal S_{EGR} supplied to the EGR valve 24 itself. In particular (block 190), the following checks are carried out:
- start of opening (the minimum value S_{EGRMIN} of the recirculation control signal S_{EGR}, corresponding to which variation of the measured flow rate signal Q_{AM} is noted, must be lower than a predetermined threshold S_{EGROP}, Figure 7);
- maximum hysteresis (the difference ΔQ_{IST} between the characteristic of opening and the characteristic of closure of the EGR valve 24, for the same recirculation control signal S_{EGR}, must be lower than a predetermined threshold Δ_{QISTMAX}, Figure 8; the characteristic of opening and closure mean the characteristics obtained respectively for decreasing and increasing values of the recirculation control signal S_{EGR});
- inclusion in limit envelope (the characteristic of the EGR valve 24 must be within a region included between two predetermined limit envelope curves INV_{INF}, INV_{SUP}, Figure 9);
- gain in linear area (the gradient P of the characteristic in the linear area must be included between a minimum gradient P_{MIN} and a maximum gradient P_{MAX}, Figure 10).

If all the above-described tests are passed (YES output from block 190), the system 9 generates a correct functioning code relative also to the EGR valve 24 (block 200); if, however, even a single one of the tests fails (NO output from block 190), there is generation of an error code relative to malfunctioning of the EGR valve 24 which has a characteristic which is not in conformity with the specifications (block 195).

The method described advantageously permits diagnosis in automatic mode of malfunctioning of the flow meter 11 or of the EGR valve 24, thus making maintenance intervention possible in good time. In addition, in most cases, the method makes it possible to determine rapidly which of the two components is faulty; this therefore prevents replacements of components which are still functioning, because it is impossible to locate the malfunctioning. The method has a high level of reliability, and can be carried out in conditions which are easy to reproduce and are totally reliable.

Finally, it is apparent that modifications and variations can be made to the panel described, without departing from the scope of the present invention, as defined in the attached claims.

## Claims

1. Method for diagnosis of faults in units of an internal combustion engine (1) air supply system, comprising a flow meter (11), which supplies a measured flow rate signal (Q_{AM}) correlated to a fresh air capacity admitted by the engine, and a valve (24) for recirculation of the exhaust gases, in order to supply in a controlled manner to the engine a fraction of the exhaust gases, the method comprising the steps of:
carrying out first checks (100-120), in conditions which are independent from the operative state of the said valve (24), in order to verify a first level of efficiency of the said flow meter (11);
if the first level of efficiency of the said flow meter (11) is verified, carrying out second checks (130-140), in conditions which are compatible with the first level of efficiency of the flow meter (11), in order to verify a first level of efficiency of the said valve (24) ;
**characterised in that** third checks are carried out in order to verify (150, 155) a second level of efficiency of the flow meter (11), if the said first level of efficiency of the flow meter (11) and the said first level of efficiency of the valve (24) are verified.

2. Method according to Claim 1, **characterised in that** the step of carrying out first checks comprises verification (100) that, before the engine (1) is started up, a measured flow rate signal (Q_{AM}) supplied by the said flow meter (11) is within a first predetermined interval of values (I₀) comprising a zero value.

3. Method according to Claim 2, **characterised in that** the said step of carrying out first checks comprises the steps of:
starting up the engine (1) at minimum speed;
commanding closure of the said valve (24); and
verifying (110) that the said measured flow rate signal (Q_{AM}) is greater than a first predetermined threshold (S_{MIN}).

4. Method according to Claim 2 or Claim 3, **characterised in that** the said step of carrying out first checks comprises carrying out a test of linearity (117-120) of the said flow meter (11).

5. Method according to Claim 4, **characterised in that** the said test of linearity (120) of the said flow meter (11) comprises:
varying a number of revolutions of the engine (1) for a predetermined time, keeping the said valve (24) closed;
calculating (118) a specific flow rate signal (Q_{AN}) on the basis of the said measured flow rate signal (Q_{AM}) and of the number of revolutions of the engine (1);
verifying (120) that the said specific flow rate signal (Q_{AN}) remains within a second predetermined interval of values (I_{L}) during this predetermined time.

6. Method according to any one of the preceding claims, **characterised in that** the said step of carrying out second checks comprises the steps of:
commanding (130) in sequence the opening and closure of the said valve (24), keeping the number of revolutions of the engine (1) constant;
calculating (135) a first difference (Δ_{QA}) between a first and second value of the measured flow rate signal (Q_{AM}), supplied by the flow meter (11) in the presence respectively of a command (S_{EGR}) for closure (S_{EGR1}) and of a command for opening (S_{EGR2}) of the said valve (24); and
verifying (140) that the said first difference (△_{QA}) is greater than a second predetermined threshold (S_{Q}).

7. Method according to any one of the preceding claims, **characterised in that** the said step of carrying out third checks comprises the steps of:
determining (119) at least one estimated flow rate value (Q_{AF}), in a predetermined operative condition of the engine (1);
recording (117) a value of the measured flow rate signal (Q_{AM}), corresponding to the said predetermined operative condition of the engine (1);
verifying (155) that a ratio (R_{K}) between the said estimated flow rate value (QAE) and the value of the measured flow rate signal (Q_{AM}) recorded, is included in a third predetermined interval of values (I_{OP}) .

8. Method according to Claim 7, **characterised in that** it comprises the steps of:
if the said ratio (R_{K}) is outside the said third predetermined interval of values (I_{OP}), comparing (165) the said ratio (R_{K}) with a third predetermined threshold (S_{L}) outside the said third predetermined interval of values (I_{QP});
if the said ratio (RK) is not contained within the said third predetermined interval of values (I_{OP}) and the said third threshold (S_{L}), measuring (116) a first temperature (T_{A1}) and a second temperature (T_{A2}) of the air respectively at the flow meter (11) and in an intake manifold (14) of the engine (1), whilst maintaining the valve (24) closed; and
comparing (175) a second difference (△T) between the said first temperature (T_{A1}) and the said second temperature (T_{A2}) with a fourth predetermined threshold (S_{D}).

9. Method according to Claim 7 or Claim 8, **characterised in that** it comprises the steps of:
if the said ratio (R_{K}) is within the said third predetermined interval of values (I_{OP}), carrying out fourth checks (190) in order to verify a second level of efficiency of the said valve (24).

10. Method according to Claim 9, **characterised in that** the said step of carrying out fourth checks (190) comprises the steps of:
verifying that a characteristic of the said valve (24) has an opening point lower than a fifth predetermined threshold (S_{EGROP});
verifying that the characteristic of the said valve (24) has a hysteresis lower than a maximum hysteresis;
verifying that the characteristic of the said valve (24) is included in a predetermined limit envelope (INV_{INF}, INV_{SUP}); and
verifying that the characteristic of the said valve (24) has a predetermined linear gain (P).

## Patentansprüche

1. Diagnostisches Verfahren zur Feststellung von Fehlern in Einheiten eines Luftzuführsystems für Verbrennungskraftmaschinen (1) mit einem Strömungsmesser (11), welcher ein Signal (Q_{AM}) der gemessenen Strömungsmenge erzeugt, welches mit der der Verbrennungskraftmaschine zugeführte Frischluftkapazität korreliert und mit einem Rezirkulations-Ventil (24) für die Abgase, zur gesteuerten Rückführung eines Teils der Abgase zur Verbrennungskraftmaschine, wobei das Verfahren die Schritte umfasst:
Durchführung von ersten Prüfungen (100-200) zur Ermittlung eines ersten Wirksamkeitsniveaus des Strömungsmessers (11) in einem vom Betriebszustand des besagten Ventils (24) unabhängigen Zustand, und
im Anschluss an die Ermittlung des ersten Wirksamkeitsniveaus des Strömungsmessers (11) Durchführung zweiter Prüfungen (130-140) in Betriebszuständen, die mit dem ersten Wirksamkeitsniveau des Strömungsmessers (11) kompatibel sind, um ein erstes Wirksamkeitsniveau des besagten Ventils (24) zu ermitteln,
**dadurch gekennzeichnet,**
**dass** dritte Prüfungen zur Ermittlung (150, 153) eines zweiten Wirksamkeitsniveaus des Strömungsmessers (11) durchgeführt werden, wenn das erste Wirksamkeitsniveau des Strömungsmessers (11) und das erste Wirksamkeitsniveau des Ventils (24) ermittelt sind.

2. Verfahren nach Anspruch 1, **dadurch gekennzeichnet, dass** der Schritt der Durchführung der ersten Prüfungen die Ermittlung (100) umfasst, dass ein vor dem Start der Verbrennungskraftmaschine (1) vom Strömungsmesser (11) geliefertes gemessenes Strömungsmengen-Signal (Q_{AM}) innerhalb eines ersten vorbestimmten, den Wert Null enthaltenden Intervalls von Werten (Iₒ) liegt.

3. Verfahren nach Anspruch 2, **dadurch gekennzeichnet, dass** der Schritt der Durchführung der ersten Prüfungen die Schritte umfasst:
Starten der Verbrennungskraftmaschine (1) mit minimaler Drehzahl;
Auslösungen eines Schließvorgangs des besagten Ventils (24); und
Verifizierung (110), dass das Signal (Q_{AM}) der gemessenen Strömungsmenge größer als ein erster vorgegebener Schwellenwert (Sₘᵢₙ) ist.

4. Verfahren nach Anspruch 2 oder 3, **dadurch gekennzeichnet, dass** der Schritt der Durchführung der ersten Prüfungen einen Test der Linearität (117-120) des besagten Strömungsmessers (11) umfasst.

5. Verfahren nach Anspruch 4, **dadurch gekennzeichnet, dass** der besagte Test der Linearität (120) des Strömungsmessers (11) umfasst:
Veränderung der Drehzahl der Verbrennungskraftmaschine (1) während eines vorgegebenen Zeitabschnitts, wobei das besagte Ventil (24) geschlossen gehalten wird;
Berechnung (118) eines spezifischen Strömungsmengen-Signals (Q_{AN}) auf der Basis des gemessenen Strömungsmengen-Signals (Q_{AM}) und der Drehzahl der Verbrennungskraftmaschine (1); und
Verifizierung (120), dass das spezifische Strömungsmengen-Signal (Q_{AN}) innerhalb eines zweiten vorbestimmten Intervalls von Werten (I_{L}) während des vorgegebenen Zeitabschnitts liegt.

6. Verfahren nach einem der vorausgehenden Ansprüche, **dadurch gekennzeichnet, dass** der Schritt zur Durchführung von zweiten Prüfungen die Schritte umfasst:
Aufeinanderfolgende Auslösung (130) von Öffnungs- und Schließvorgängen des besagten Ventils (24), wobei die Drehzahl der Verbrennungskraftmaschine (1) konstant gehalten wird;
Berechnung (135) einer ersten Differenz (△_{QA}) zwischen einem ersten und einem zweiten Wert der vom Strömungsmesser (11) jeweils bei Vorliegen eines Kommandos (S_{EGR}) zum Schließen (S_{EGR1}) bzw. eines Kommandos zum Öffnen (S_{EGR2}) des besagten Ventils (24) gelieferten gemessenen Strömungsmengen-Signals (Q_{AM}); und
Verifizierung (140) das die besagte erste Differenz (△_{QA}) größer als der zweite vorgegebene Stellenwert (S_{Q}) ist.

7. Verfahren nach einem der vorausgehenden Ansprüche, **dadurch gekennzeichnet, dass** der besagte Schritt der Durchführung von dritten Prüfungen die Schritte umfasst:
Bestimmung (119) von wenigstens einem geschätzten Strömungsmengen-Wert (Q_{AE}) bei einem vorgegebenen Betriebszustand der Verbrennungskraftmaschine (1);
Aufzeichnung (117) des gemessenen Strömungsmengen-Werts (Q_{AM}) entsprechend dem vorgegebenen Betriebszustand der Verbrennungskraftmaschine (1); und
Verifizierung (155), dass das Verhältnis (R_{K}) zwischen dem geschätzten Wert (Q_{AE}) der Strömungsmenge und dem aufgezeichneten Wert (Q_{AM}) des gemessenen Strömungsmengen-Signals (Q_{AE}) innerhalb eines dritten vorgegebenen Intervalls von Werten (I_{OP}) liegt.

8. Verfahren nach Anspruch 7, **dadurch gekennzeichnet, dass** es die Schritte umfasst:
Falls besagtes Verhältnis (R_{K}) außerhalb des besagten dritten vorgegebenen Intervalls von Werten (lₒₚ) liegt, vergleichen (165) des besagten Verhältnisses (R_{K}) mit einem dritten vorgegebenen Schwellenwert (S_{L}) außerhalb des besagten dritten vorgegebenen Intervalls von Werten (I_{OP});
falls besagtes Verhältnis (R_{K}) nicht innerhalb des besagten vorgegebenen Intervalls von Werten (I_{OP}) und dem besagten dritten Schwellenwert (S_{L}) liegt, messen (116) einer ersten Temperatur (T_{A1}) und einer zweiten Temperatur (T_{A2}) der Luft am Strömungsmesser (11) und im Einlass-Sammler (14) der Verbrennungskraftmaschine (1) bei geschlossenem Ventil (24); und
vergleichen (175) einer zweiten Differenz (△T) zwischen der besagten ersten Temperatur (T_{A1}) und der besagten zweiten Temperatur (T_{A2}) mit einem vierten vorgegebenen Schwellenwert (S_{P}).

9. Verfahren nach Anspruch 7 oder 8, **dadurch gekennzeichnet, dass** es die Schritte umfasst:
Wenn besagtes Verhältnis (R_{K}) innerhalb des besagten dritten vorgegebenen Intervalls von Werten (I_{OP}) liegt, durchführen vierter Prüfungen (190) zur Ermitlung eines zweiten Wirksamkeitsniveaus des besagten Ventils (24).

10. Verfahren nach Anspruch 9, **dadurch gekennzeichnet, dass** der besagte Schritt der Durchführung von vierten Prüfungen (190) die Schritte umfasst:
Verifizierung das besagtes Ventil (24) eine Charakteristik mit einem Öffnungspunkt aufweist, welcher niedriger als ein fünfter vorgegebener Schwellenwert (S_{EGROP}) ist;
Verifizierung, dass die Charakteristik des besagten Ventils (24) eine Hysterese aufweist, welche kleiner als eine maximale Hysterese ist;
Verifizierung, dass die Charakteristik des besagten Ventils (24) innerhalb eines vorgegebenen Grenz-Hüllbereichs (INV_{INF}, INV_{SUP}) liegt; und
Verifizierung, das die Charakteristik des besagten Ventils (24) eine vorgegebene lineare Zunahme (P) aufweist.

## Revendications

1. Procédé pour le diagnostic d'avaries dans des unités d'un système d'approvisionnement en air de moteur à combustion interne (1), comprenant un débitmètre (11) qui fournit un signal de taux d'écoulement mesuré (Q_{AM}) en corrélation avec une capacité d'air frais admise par le moteur, et une soupape (24) pour la re-circulation des gaz d'échappement afin de fournir une fraction des gaz d'échappement au moteur de façon contrôlée, le procédé comprenant les étapes consistant à :
accomplir des premières vérifications (100-120), dans des conditions qui sont indépendantes de l'état de fonctionnement de ladite soupape (24), afin de vérifier un premier niveau d'efficacité dudit débitmètre (11) ;
si le premier niveau d'efficacité dudit débitmètre (11) est vérifié, accomplir des deuxièmes vérifications (130-140), dans des conditions qui sont compatibles avec le premier niveau d'efficacité du débitmètre (11), afin de vérifier un premier niveau d'efficacité de ladite soupape (24), **caractérisé en ce que** des troisièmes vérifications sont accomplies afin de vérifier (150, 155) un deuxième niveau d'efficacité du débitmètre (11), si ledit premier niveau d'efficacité du débitmètre (11) et ledit premier niveau d'efficacité de la soupape (24) sont vérifiés.

2. Procédé selon la revendication 1, **caractérisé en ce que** l'étape consistant à accomplir des premières vérifications comprend la vérification (100), avant que le moteur (1) soit démarré, qu'un signal de taux d'écoulement mesuré (Q_{AM}) fournit par ledit débitmètre (11) se situe dans un premier intervalle prédéterminé de valeurs (Iₒ) comprenant une valeur nulle.

3. Procédé selon la revendication 2, **caractérisé en ce que** ladite étape consistant à accomplir des premières vérifications comprend les étapes consistant à :
démarrer le moteur (1) selon une vitesse minimale ;
commander la fermeture de ladite soupape (24) ; et
vérifier (110) que ledit signal de taux d'écoulement mesuré (Q_{AM}) est supérieur à une première limite prédéterminée (S_{MIN}).

4. Procédé selon la revendication 2 ou la revendication 3, **caractérisé en ce que** ladite étape consistant à accomplir des premières vérifications comprend l'accomplissement d'un essai de linéarité (117-120) dudit débitmètre (11).

5. Procédé selon la revendication 4, **caractérisé en ce que** ledit essai de linéarité (120) dudit débitmètre (11) comprend :
modifier un nombre de révolutions du moteur (1) pendant une période prédéterminée, maintenir ladite soupape (24) fermée ;
calculer (118) un signal de taux d'écoulement spécifique (Q_{AN}) à partir dudit signal de taux d'écoulement mesuré (Q_{AM}) et du nombre de révolutions du moteur (1) ;
vérifier (120) que ledit signal de taux d'écoulement spécifique (Q_{AN}) demeure dans un deuxième intervalle prédéterminé de valeurs (I_{L}) pendant cette période prédéterminée.

6. Procédé selon l'une parmi les revendications précédentes, **caractérisé en ce que** ladite étape consistant à accomplir des deuxièmes vérifications comprend les étapes consistant à :
commander (130) l'ouverture et la fermeture de ladite soupape (24) en séquence, maintenir le nombre de révolutions du moteur (1) constant ;
calculer (135) une première différence (△Q_{A}) entre une première valeur et une deuxième valeur du signal de taux d'écoulement mesuré (Q_{AM}), fournies par le débitmètre (11) en présence respectivement d'une commande (S_{EGR}) pour la fermeture (S_{EGR1}) et d'une commande pour l'ouverture (S_{EGR2}) de ladite soupape ; et
vérifier (140) que ladite première différence (△Q_{A}) est supérieure à une deuxième limite prédéterminée (S_{Q}).

7. Procédé selon l'une parmi les revendications précédentes, **caractérisé en ce que** ladite étape consistant à accomplir des troisièmes vérifications comprend les étapes consistant à :
déterminer (119) au moins une valeur de taux d'écoulement estimé (Q_{AE}) dans une condition de fonctionnement du moteur (1) prédéterminée;
enregistrer (117) une valeur du signal de taux d'écoulement mesuré (Q_{AM}) correspondant à ladite condition de fonctionnement du moteur (1) prédéterminée;
vérifier (155) qu'un rapport (R_{K}) entre ladite valeur de taux d'écoulement estimé (Q_{AE}) et la valeur du signal de taux d'écoulement mesuré (Q_{AM}) enregistrée est inclus dans un troisième intervalle prédéterminé de valeurs (I_{OP}).

8. Procédé selon la revendication 7, **caractérisé en ce qu'**il comprend les étapes consistant à :
si ledit rapport (R_{K}) est à l'extérieur dudit troisième intervalle prédéterminé de valeurs (I_{OP}), comparer (165) ledit rapport (R_{K}) avec une troisième limite prédéterminée (S_{L}) à l'extérieur dudit troisième intervalle prédéterminé de valeurs (I_{OP});
si ledit rapport (R_{K}) n'est pas contenu dans ledit troisième intervalle prédéterminé de valeurs (I_{OP}) et par ladite troisième limite prédéterminée (S_{L}), mesurer (116) une première température (T_{A1}) et une deuxième température (T_{A2}) de l'air, respectivement au niveau du débitmètre (11) et dans un collecteur d'admission (14) du moteur (1), en maintenant la soupape (24) fermée ; et
comparer (175) une deuxième différence (△T) entre ladite première température (T_{A1}) et ladite deuxième température (T_{A2}) avec une quatrième limite prédéterminée (S_{D}).

9. Procédé selon la revendication 7 ou la revendication 8, **caractérisé en ce qu'**il comprend les étapes consistant à :
si ledit rapport (R_{K}) est contenu dans ledit troisième intervalle prédéterminé de valeurs (I_{OP}), accomplir des quatrièmes vérifications (190) afin de vérifier un deuxième niveau d'efficacité de ladite soupape (24).

10. Procédé selon la revendication 9, **caractérisé en ce que** ladite étape consistant à accomplir des quatrièmes vérifications (190) comprend les étapes consistant à :
vérifier qu'une caractéristique de ladite soupape (24) possède un point d'ouverture inférieur à une cinquième limite prédéterminée (S_{EGROP}) ;
vérifier que la caractéristique de ladite soupape (24) possède une hystérésis inférieure à une hystérésis maximale ;
vérifier que la caractéristique de ladite soupape (24) est comprise dans une enveloppe de limite prédéterminée (INV_{INF}, INV_{SUP}) ; et
vérifier que la caractéristique de ladite soupape (24) possède un gain linéaire prédéterminé (P).
